# EUROPÄISCHE PATENTSCHRIFT

(11) **EP 2 205 457 B1**
(45) Veröffentlichungstag und Bekanntmachung des Hinweises auf die Patenterteilung: **12.07.2017**
(21) Anmeldenummer: 08841892.6
(22) Anmeldetag: 23.10.2008
(51) Int. Cl.: B60G 17/016, B60G 17/0165, B60G 17/018, B60G 17/0185

(54) **VERFAHREN UND SYSTEM ZUR BEEINFLUSSUNG DER BEWEGUNG EINES IN SEINEN BEWEGUNGSABLÄUFEN STEUERBAREN ODER REGELBAREN FAHRZEUGAUFBAUS EINES KRAFTFAHRZEUGES UND FAHRZEUG**
METHOD AND SYSTEM FOR INFLUENCING THE MOVEMENT OF A MOTOR VEHICLE BODY, THE CHAIN OF MOVEMENTS OF WHICH CAN BE CONTROLLED OR ADJUSTED, AND ASSOCIATED VEHICLE
PROCÉDÉ ET SYSTÈME DESTINÉS À INFLUENCER LE MOUVEMENT D'UNE STRUCTURE DE VÉHICULE MOTORISÉ POUVANT ÊTRE COMMANDÉE OU RÉGULÉE DANS SES PROCESSUS DE MOUVEMENT ET VÉHICULE

(30) Priorität: 26.10.2007 DE 102007051226
(43) Veröffentlichungstag der Anmeldung: 14.07.2010
(73) Patentinhaber: Volkswagen Aktiengesellschaft, 38440 Wolfsburg (DE)
(72) Erfinder: ARENZ, Andrea, 38458 Velpke (DE)
(86) Internationale Anmeldenummer: PCT/EP2008/008996
(87) Internationale Veröffentlichungsnummer: WO 2009/053080

(56) Entgegenhaltungen:
- EP-A- 0 901 082
- WO-A-2007/034102
- DE-A1- 4 113 387
- DE-A1- 4 430 364
- DE-A1- 10 329 432
- DE-A1- 10 335 057
- DE-A1-102005 014 237
- US-A- 4 749 210
- US-A- 4 805 923
- US-A- 5 390 121
- US-A- 5 432 700
- US-A- 6 097 999
- US-A- 6 157 879
- US-A1- 2003 075 882

## Beschreibung

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, gemäß dem Oberbegriff des Anspruchs 1. Die Erfindung betrifft zudem ein System zur Ausführung dieses Verfahren. Ein Verfahren und ein System der gattungsgemäßen Art sind aus WO 2007/034102 A bekannt. Weiter ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Bei den bekannten Verfahren und Systemen zur Beeinflussung der Bewegung des Fahrwerkes ist nachteilig, dass als Ausgangsgröße aus eingesetzten Reglermodulen eine Kraft angefordert wird. Dies hat den Nachteil, dass zusätzlich eine Dämpfergeschwindigkeit als Zusatzgröße benötigt wird, um über eine Kennfeldumrechnung zu der eigentlichen Stellgröße, dem Steuerstrom, zu gelangen. Darüber hinaus kann auch bei einer konstanten Kraftanforderung der Strom sich in Abhängigkeit von der Dämpfergeschwindigkeit ändern. Da eine Kennfeldumrechnung fehlerbehaftet ist, wird auch die resultierende Dämpferkraft entsprechend unstetig. Gerade im Bereich von niedrigen Dämpfergeschwindigkeiten, die insbesondere häufig bei Querdynamikvorgängen vorliegen, ist dies nachteilig, da hier die größten Nichtlinearitäten und Ungenauigkeiten im Kennfeld vorliegen. Darüber hinaus ist bekannt, dass im Geschwindigkeitsnulldurchgang im Kennfeld der Dämpfer in der Regel weich gestellt wird. Gerade bei Dämpfergeschwindigkeiten, die um null herum pendeln wird dann bei einer konstanten Kraftanforderung ein ständig pendelnder Strom gestellt, der kontraproduktiv für die eigentliche Regelung ist.

Der Erfindung liegt daher die Aufgabe zugrunde, ein Verfahren und ein System der gattungsgemäßen Art anzugeben, mittels denen in einfacher und sicherer Weise eine Regelung der Bewegung eines Fahrzeugaufbaus mit elektronisch ansteuerbaren Aktuatoren (Dämpfern) unter gleichzeitiger Lösung des Zielkonfliktes zwischen Fahrkomfort, Fahrdynamik und Fahrsicherheit möglich ist.

Erfindungsgemäß wird diese Aufgabe durch ein Verfahren mit den im Anspruch 1 genannten Merkmalen gelöst. Dadurch, dass mittels des Dämpferreglers aus den Sensorsignalen unter Berücksichtigung von momentanen und/oder erwarteten Zuständen, in Abhängigkeit von wählbaren Anforderungen an die Bewegung des Fahrzeugaufbaus und Fahrsicherheitsanforderungen, mittels zustandsabhängiger Regelalgorithmen das wenigstens eine Steuersignal zur Ansteuerung der Aktuatoren ermittelt wird, ist vorteilhaft möglich, den Zielkonflikt zwischen Fahrkomfort und Fahrdynamik einerseits und Fahrsicherheit andererseits durch die spezielle Einbindung der zustandsabhängigen Regelalgorithmen weitgehend aufzulösen. Durch die Berücksichtigung der momentanen und/oder erwarteten Zustände bei der Bereitstellung der Steuersignale für die Aktuatoren, das heißt also bei der Einstellung der Dämpfung der Bewegung des Fahrzeugaufbaus, wird neben den Komfortanforderungen eines Fahrzeugführers auch den dynamischen Fahrzuständen des Fahrzeuges insbesondere auch unter Berücksichtigung sicherheitskritischer Zustände Rechnung getragen.

In bevorzugter Ausgestaltung der Erfindung ist vorgesehen, dass als das wenigstens eine Steuersignal ein direkt die Aktuatoren beeinflussender Steuerstrom bereitgestellt wird. Hierdurch entfällt einerseits das Erfordernis der Bereitstellung einer Dämpfergeschwindigkeit als Zusatzgröße und andererseits ist die aus dem Stand der Technik bekannte Kennfeldumrechnung zu der eigentlichen Stellgröße nicht mehr erforderlich.

In weiterer bevorzugter Ausgestaltung der Erfindung ist vorgesehen, dass als wählbare Anforderung an die Bewegung des Fahrzeugaufbaus wenigstens zwischen Komfort und Sportlichkeit gewählt werden kann, wobei insbesondere die Wahl stufenlos und/oder in Stufen zwischen hohem Komfort und hoher Sportlichkeit erfolgt. Hierdurch wird in einfacher Weise eine Anpassung der Beeinflussung der Bewegung des Fahrzeugaufbaus an die individuellen Bedürfnisse eines Fahrzeugführers möglich. Es ist in der Erfindung vorgesehen, dass bei der Ermittlung des wenigstens einen Steuersignals als momentane und/oder erwartete Zustände Fahrzustände und/oder Beladungszustände und/oder Energiezustände und/oder Fahreraktivitäten berücksichtigt werden. Hierdurch lassen sich sehr vorteilhaft als Fahrzustände die Vertikaldynamik und/oder die Längsdynamik und/oder die Querdynamik des Fahrzeuges berücksichtigen. Darüber hinaus können sehr vorteilhaft als Energiezustände die Energiezustände des Aufbaus und/oder der Räder und/oder der Straße und/oder des Aktuators berücksichtigt werden. Ferner lassen sich als Fahreraktivitäten vorteilhaft der Betätigungszustand des Gaspedals und/oder des Bremspedals und/oder der Lenkung und/oder der Getriebeschaltung berücksichtigen. Ein aus diesen möglichen Zuständen einzeln oder in beliebiger Kombination ermitteltes Steuersignal führt zu einer sehr komfortablen Anpassung der Bewegung des Fahrzeugaufbaus an die vom Fahrzeugführer tatsächlich gestellten Anforderungen. Insgesamt ist somit ein sehr harmonischer Bewegungsablauf des Fahrzeugaufbaus einstellbar, der vom Fahrzeugführer beziehungsweise den Fahrzeuginsassen als angenehm und komfortabel empfunden wird.

Darüber hinaus ist in bevorzugter Ausgestaltung der Erfindung vorgesehen, dass ein Komfortanspruch in den Regelalgorithmen, insbesondere durch die Verwendung von mindestens einem zustandsabhängigen Filter und/oder mindestens einem zustandsabhängigen Vertikaldynamikmodul für die Einzelradbewegung und/oder die Gesamtbewegung des Aufbaus (Hub, Wanken und Nicken) und/oder mindestens einem zustandsabhängigen Endlagen-Modul, insbesondere unter Berücksichtigung der Energiezustände von Aufbau, Dämpfer, Rad und/oder Straße realisiert wird. Hierdurch wird vorteilhaft eine sehr feinfühlige, dem gewünschten Komfortanspruch Rechnung tragende und die gegebenen beziehungsweise erwarteten Zustände berücksichtigende Regelung der Bewegung des Aufbaus möglich.

Ferner ist in bevorzugter Ausgestaltung der Erfindung vorgesehen, dass ein Sportlichkeits- und/oder Fahrsicherheitsanspruch in den Regelalgorithmen insbesondere durch die Verwendung von zustandsabhängigen Filtern und zustandsabhängigen Längs- und Querdynamikmodulen für quasistationäre und für dynamische Vorgänge, insbesondere unter Berücksichtigung der Energiezustände von Aufbau, Dämpfer, Rad und/oder Straße, realisiert wird. Auch hierdurch wird den Anforderungen des Fahrzeugführers hinsichtlich einer sportlichen Dämpferabstimmung sehr vorteilhaft gerecht, wobei sicherheitskritische Fahrzustände berücksichtigt werden. Ein Fahrzeugführer kann somit seiner gewünschten sportlichen Fahrweise nachkommen, ohne dass hierdurch zusätzliche sicherheitskritische Situationen hervorgerufen werden.

Ferner ist bevorzugt vorgesehen, dass die zustandsabhängigen Regelalgorithmen von den Zuständen und Anforderungen einzeln oder kombiniert durchgeführt werden. Hierdurch wird vorteilhaft eine Abstimmung der Dämpfung der Bewegung des Fahrzeugaufbaus durch alle erdenklichen Einflüsse, auch Störeinflüsse, möglich. In der Erfindung ist vorgesehen, dass die zustandsabhängigen Regelalgorithmen übergeordnete Meldungen berücksichtigen, wobei als übergeordnete Meldungen vorzugsweise Diagnosesignale und/oder Ersatzwertsignale und/oder Notlaufsignale berücksichtigt werden. Hierdurch werden bei der Ermittlung der Steuersignale zur Ansteuerung der Aktuatoren Fehlerzustände berücksichtigt und die Ermittlung der Steuersignale in dem Dämpferregler durch die zustandsabhängigen Regelalgorithmen soweit angepasst, dass die minimal erforderlichen Regelungsziele trotz eventueller Fehlerzustände erreicht werden. Insbesondere kann trotz des Auftretens eines Fehlers bis zu einer Behebung des Fehlers die Dämpferregelung entsprechend den Anforderungen beziehungsweise den gegebenen und erwarteten Zuständen über die Bereitstellung von Ersatzgrößen oder Notfunktionen soweit aufrechterhalten werden, dass ohne Einschränkung oder mit gegebenenfalls eingeschränktem Komfort das Fahrzeug weiter gefahren werden kann. Komforteinbußen für Fahrzeugführer beziehungsweise die Fahrzeuginsassen werden somit trotz eingetretener Fehler weitgehend vermieden.

Darüber hinaus ist in bevorzugter Ausgestaltung der Erfindung vorgesehen, dass die Diagnosesignale, Ersatzwertesignale und/oder Notlaufsignale durch die zustandsabhängigen Regelalgorithmen selbsttätig abgefragt und/oder generiert werden, wobei vorzugsweise Identifikationssignale und/oder Statussignale einer die Regelalgorithmen durchführenden Funktionssoftware und/oder einer untergeordneten oder parallelen zugeordneten Basis-Software berücksichtigt werden. Die Diagnose umfasst vorzugsweise die Sensoren und/oder die Aktuatoren und/oder die Steuermittel der Aktuatoren, das heißt die an der Beeinflussung der Bewegung des Fahrzeugaufbaus beteiligten Komponenten. Hierdurch wird sichergestellt, dass bei tatsächlichem Fehlereintritt die beeinflussende Bewegung des Fahrzeugaufbaus möglichst nah an der gewünschten Bewegung gefahren werden kann, bis die Fehlerbeseitigung erfolgt beziehungsweise möglich wird.

Die Aufgabe wird ferner durch ein System zur Beeinflussung der Bewegung eines in seinen Bewegungsabläufen steuerbaren oder regelbaren Fahrzeugaufbaus eines Kraftfahrzeuges, gemäß Anspruch 12 gelöst. Es kann vorgesehen sein, dass der Dämpferregler eine Eingangsschnittstelle, ein Signaleingangsmodul, ein Reglermodul, ein Signalausgangsmodul und eine Ausgangsschnittstelle umfasst. Hierdurch lässt sich in einfacher Weise eine gegebenenfalls hierarchisch aufeinander aufgebaute Ermittlung der Steuersignale für die Aktuatoren implementieren. Vorzugsweise umfasst das Signalausgangsmodul ein Stromberechnungsmodul, wodurch die Bereitstellung eines die Stellmittel der Aktuatoren direkt ansteuerndes Stromsignals durch den Dämpferregler möglich wird. Eine Zuordnung einzelner Teilmodule ist innerhalb der modularen Struktur des Dämpferreglers nach funktionellen und/oder hierarchischen Gesichtspunkten variabel möglich. Das System der Erfindung weist ein Fehlermanagementmodul auf. Weiterhin kann das Signaleingangsmodul ein Filtermodul, ein Mensch-Maschine -Interfacemodul (Man-Maschine-Interfacemodul), und ein Ladungserkennungsmodul umfassen. Das Reglermodul kann ebenfalls ein Straßenerkennungsmodul, ein Endlagendämpferungsmodul, ein Querdynamikmodul, ein Längsdynamikmodul und ein Vertikaldynamikmodul umfassen.

Das Fehlermanagementmodul umfasst im Sinne der Erfindung ein Diagnosemodul, ein Ersatzwertekonzeptmodul und ein Regel-Notlaufstatusmodul. Das Signalausgangsmodul kann ferner ein Stromberechnungsmodul umfassen.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch ein Kraftfahrzeug mit einer Dämpferregelung;
- Figur 2: eine Prinzipskizze eines Kraftfahrzeuges mit vertikalen Eck-Aufbaugeschwindigkeiten;
- Figur 3: eine Prinzipskizze eines Kraftfahrzeuges mit vertikalen Modal-Aufbaugeschwindigkeiten;
- Figur 4: eine Prinzipskizze eines Kraftfahrzeuges mit im Dämpfersystem angeordneten Sensoren und den resultierenden Rad-, Aufbau- und Dämpfergeschwindigkeiten;
- Figur 5: ein Beispielkennfeld eines geregelten Dämpfers;
- Figur 6: eine Grobstruktur der Funktionsmodule einer Dämpferregelung;
- Figuren 7 - 14: Prinzip-Blockschaltbilder von einzelnen Regelungsmodulen;
- Figur 15: ein Blockschaltbild eines Standardregelkreises;
- Figur 16: ein Blockschaltbild eines erweiterten Regelkreises;
- Figur 17: eine Prinzipskizze einer Kombinationseinheit zur Ermittlung eines resultierenden Stroms unter Verwendung von Zuständen/Zustandsgrößen;
- Figur 18: eine Prinzipskizze einer Aufteilung einer Kombinationseinheit in Modulelemente und ein Gesamtelement;
- Figur 19: ein Signalflussplan eines Gesamtsystems der Dämpferregelung;
- Figur 20: ein Blockschaltbild eines fehlertoleranten Regelsystems;
- Figur 21: einen Signalflussplan der Dämpferregelung mit Fehlermanagement und
- Figur 22: ein Prinzip-Blockschaltbild eines Reglermoduls inklusive Fehler- und Statusinformationen.

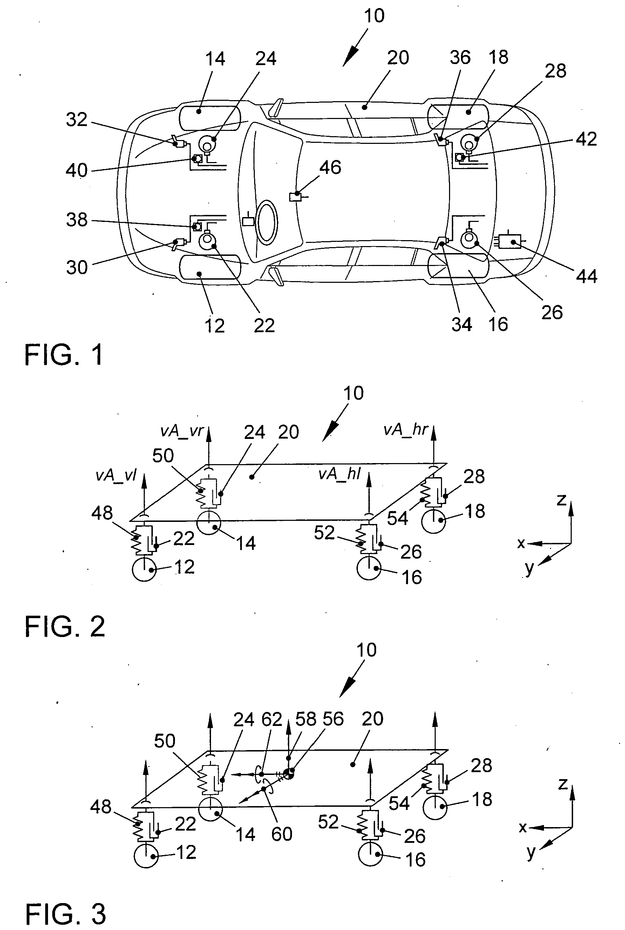

Figur 1 zeigt schematisch in Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt durch Anlegen eines Steuersignals an ein Stellmittel der Dämpfer kann die Dämpferkraft variiert werden. Das Stellmittel ist üblicher Weise als elektromagnetisches Ventil ausgebildet, so dass das Stellsignal ein Steuerstrom für das Ventil ist.

Jedem Rad beziehungsweise jedem Dämpfer ist ein Wegsensor 30, 32, 34 beziehungsweise 36 zugeordnet. Die Wegsensoren sind als Relativwegsensoren ausgebildet, das heißt diese messen eine Veränderung des Abstandes des Aufbaus 20 von dem jeweiligen Rad 12, 14, 16 beziehungsweise 18. Typischerweise werden hier sogenannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann.

Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA_vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 61, das heißt eine Drehbewegung um eine in der y-Achse liegende Querachse, und ein Wanken 63, das heißt eine Drehbewegung um eine in der x-Achse liegende Längsachse des Kraftfahrzeuges 10.

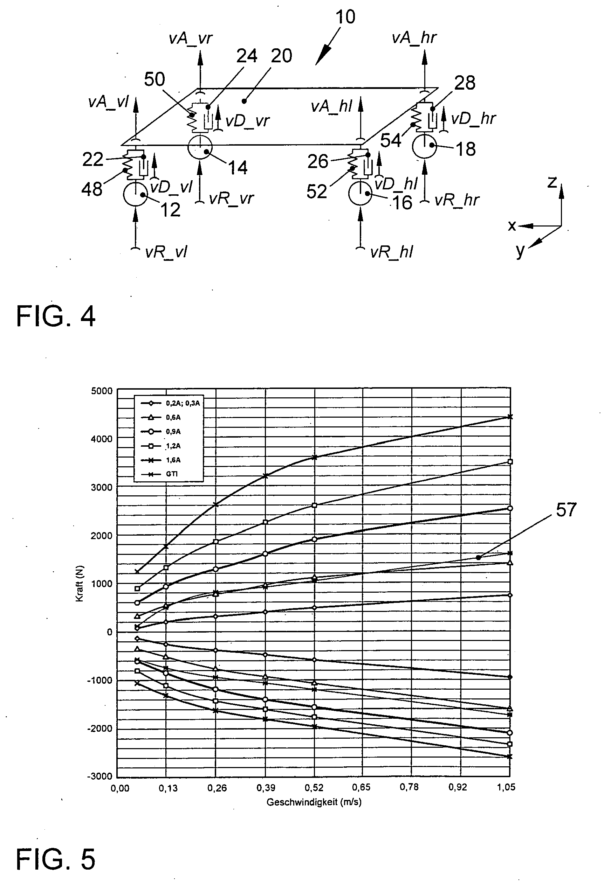

Figur 4 zeigt eine weitere Prinzipskizze des Kraftfahrzeuges 10, wobei hier, in Ergänzung zu der Darstellung in Figur 2, weitere Signale dargestellt sind. Zusätzlich sind hier die Dämpfergeschwindigkeiten vD dargestellt, wobei vD_vl die Dämpfergeschwindigkeit für den Dämpfer 22 (vorne links), vD_vr die Dämpfergeschwindigkeit für den Dämpfer 24 (vorne rechts), vD_hl die Dämpfergeschwindigkeit für den Dämpfer 26 (hinten links) und vD_hr die Dämpfergeschwindigkeit für den Dämpfer 28 (hinten rechts) ist. Die Dämpfergeschwindigkeiten können über eine Differenzierung aus den Signalen der Wegsensoren 30, 32, 34 beziehungsweise 36 (Figur 1) ermittelt werden. In Figur 4 sind ferner die Radgeschwindigkeiten vR angedeutet. Hier steht Geschwindigkeit vR_vl für das Rad 12 (vorne links), vR_vr für das Rad 14 (vorne rechts), vR_hl für das Rad 16 (hinten links) und vR_hr für das Rad 18 (hinten rechts). Die Radgeschwindigkeiten vR können beispielsweise über Radbeschleunigungssensoren ermittelt werden.

Da sowohl die Aufbaugeschwindigkeiten vA, die Dämpfergeschwindigkeiten vD und die Radgeschwindigkeiten vR alle den gleichen Richtungsvektor besitzen (in z-Richtung), besteht der Zusammenhang vD=vA-vR. Hierdurch müssen nicht alle Messgrößen in Form von Messsignalen vorliegen, sondern können aus den anderen Messgrößen errechnet werden.

In Figur 5 ist beispielhaft ein Kraft-Geschwindigkeits-Kennfeld eines geregelten Dämpfers dargestellt. Aufbau und Funktion von geregelten Dämpfern sind allgemein bekannt, so dass im Rahmen der vorliegenden Beschreibung hierauf nicht näher eingegangen wird. Hierbei kommen entweder semi-aktive Dämpfer oder aktive Dämpfer zum Einsatz. Entscheidend ist, dass über eine Beeinflussung der Dämpfergeschwindigkeit die Dämpferkraft eingestellt werden kann. Die Dämpferkraft wirkt parallel zu den Kräften der Federn (vergleiche Figuren 2 bis 4), so dass hierüber die Bewegung des Aufbaus 20 in seinen Bewegungsabläufen beeinflusst werden kann. Zur Beeinflussung der Dämpfergeschwindigkeit ist an den Dämpfern ein elektromagnetisches Ventil oder ein anderes geeignetes Ventil angeordnet, das durch Anlegen eines entsprechenden Steuerstromes ein Durchflussquerschnitt für ein Medium, insbesondere ein Hydrauliköl, beeinflusst werden. Das in Figur 5 dargestellte Beispielkennfeld zeigt verschiedene Kennlinien, wobei die Dämpferkraft in Newton über der Dämpfergeschwindigkeit vD in mm/s für verschiedene Stellströme aufgetragen ist. Die Dämpfer weisen eine große Spreizung auf, das heißt je nach anliegendem Stellstrom sind große Variationen zwischen den Dämpfergeschwindigkeiten und der Dämpferkraft einstellbar. Zur Verdeutlichung ist eine Kennlinie 57 eingetragen, die einem passiven Dämpfer entsprechen würde. Durch diese große Spreizung des Dämpfers wird eine effektive Regelung erst möglich, wobei eine Weichkennung unterhalb der passiven Kennlinie 57 liegen sollte und eine Hartkennung deutlich über der Kennlinie 57 liegen sollte. Deutlich wird auch die bereits große Spreizung bei niedrigen Dämpfergeschwindigkeiten vD sowie der im Wesentlichen lineare Verlauf der Stromlinien im Kennfeld.

Anhand der bisherigen Erläuterungen wird deutlich, dass es für eine effektive Regelung des Bewegungsablaufes des Aufbaus auf die Bereitstellung eines Stellstromes für das Steuermittel der Dämpfer ankommt. Nachfolgend wird auf die Bereitstellung dieses Stellstromes unter Berücksichtigung der Umsetzung der erfindungsgemäßen Lösungen näher eingegangen.

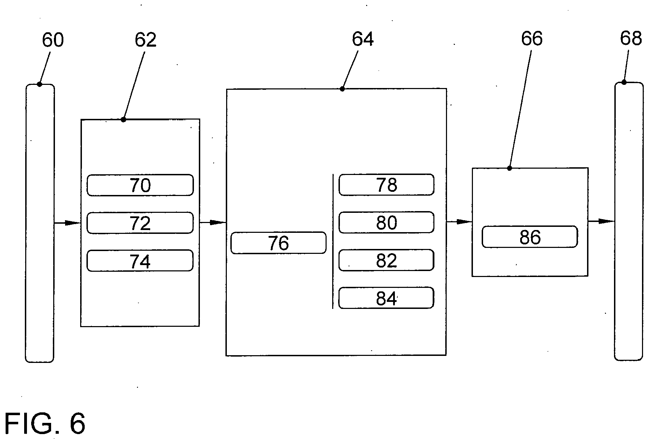

Figur 6 zeigt in einem Blockschaltbild eine Grobstruktur der Funktionsmodule zur erfindungsgemäßen Dämpferregelung. Die einzelnen Module sind aus Gründen der Übersichtlichkeit und Verständlichkeit gekapselt dargestellt. Die gesamte Struktur ist vorteilhafterweise hierarchisch über mehrere Ebenen aufgebaut. Die Funktionsmodule sind in einem Dämpferregler, vorzugsweise dem Steuergerät 44 (Figur 1) integriert. Die Dämpferregelung umfasst ein Signaleingangsmodul 60, ein Hilfsfunktionsmodul 62, ein Reglermodul 64, ein Auswertemodul 66 und ein Signalausgangsmodul 68. In dem Signaleingangsmodul 60 werden die Sensorsignale der Wegsensoren 30, 32, 34 beziehungsweise 36 und der Beschleunigungssensoren 38, 40 und 42 sowie weitere, über den CAN-Bus des Kraftfahrzeuges zur Verfügung stehende, Signale eingelesen. Das Hilfsfunktionsmodul 62 umfasst ein Man-Machine-Interfacemodul 70, ein Filtermodul 72 und ein Beladungserkennungsmodul 74.

Das Reglermodul 64 umfasst ein Straßenerkennungsmodul 76, ein Endlagendämpfungsmodul 78, ein Querdynamikmodul 80, ein Längsdynamikmodul 82 sowie ein Vertikaldynamikmodul 84. Das Auswertelogikmodul 66 umfasst ein Stromberechnungsmodul 86. Die Reglermodule 76, 78, 80, 82 und 84 generieren vorteilhafterweise einen Strom, oder eine Größe, die proportional zum Strom ist. Im Stromberechnungsmodul 86 findet die Stromberechnung aller Reglerausgangsgrößen zu Steuergrößen für die Dämpfer 22, 24, 26 beziehungsweise 28 statt. Über das Signalausgangsmodul 68 werden diese Stellströme den Dämpfern zur Verfügung gestellt. Sowohl das Signaleingangsmodul 60 als auch das Signalausgangsmodul 68 können optional selbstverständlich auch weitere Signale empfangen beziehungsweise ausgeben, je nach Ausstattung des betreffenden Kraftfahrzeuges.

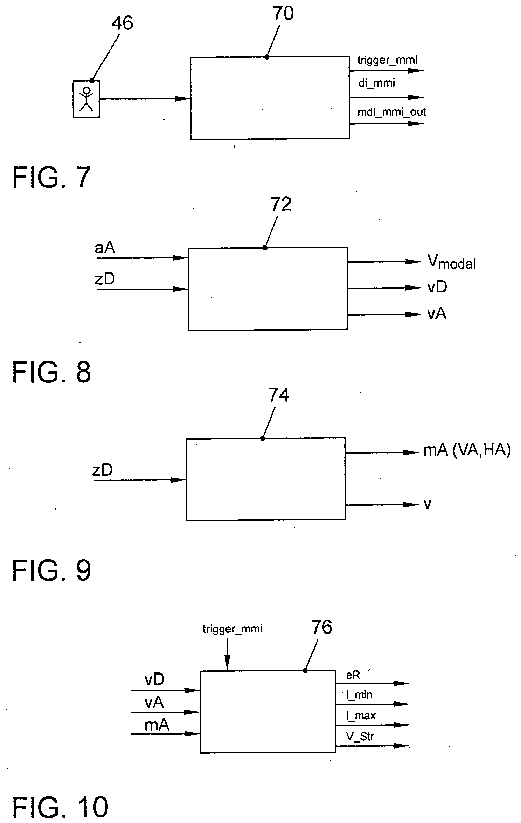

Figur 7 zeigt ein Prinzip-Blockschaltbild des Man-Machine-Interfacemoduls 70. Über das Schaltmittel 46 kann der Fahrzeugführer einen Modus auswählen. Dies ist beispielsweise der Modus "Komfort", der Modus "Sport" oder der Modus "Normal". Das Modul 70 berechnet einen Strom di_mmi für Modusumschaltungen mit dem Ziel, Fahrzeugführer und Mitfahrer auf das veränderte Komfortverhalten beim Wechsel des Fahrmodus zu sensibilisieren. Ferner gibt ein Triggervektor trigger_mmi den Status aller drei möglichen Fahrmodi wieder. Dieser Triggervektor kann dann als Schaltsignal in den weiteren Modulen verwendet werden. Ferner gibt ein Signal mdl_mmi_out den aktuell gewählten Fahrmodus aus.

Figur 8 zeigt ein Prinzip-Blockschaltbild des Filtermoduls 72. Am Filtermodul 72 liegen einerseits die von den Aufbaubeschleunigungssensoren 38, 40 und 42 (Figur 1) gelieferten Messwerte aA und die von den Relativwegsensoren 30, 32, 34 und 36 gelieferten Signale zD an. Aus diesen Eingangsgrößen werden durch das Filtermodul 72 die Aufbaugeschwindigkeiten vA an den Ecken des Aufbaus 20 berechnet. Ferner werden die Dämpfergeschwindigkeiten vD an den Ecken des Aufbaus 20 ermittelt. Darüber hinaus werden die modalen Aufbaugeschwindigkeiten vModal für Nicken und Wanken berechnet. Die Aufbaugeschwindigkeiten vA an den Ecken des Aufbaus 20 dienen primär als Eingangsgrößen für die Einzelradregelung im Vertikalregelmodul 84. Die modalen Aufbaugeschwindigkeiten vModal werden für eine zusätzliche Bedämpfung von Nick- und Wankbewegungen des Aufbaus 20 in der Modalregelung im Vertikalregelungsmodul 84 benötigt.

Figur 9 zeigt ein Prinzip-Blockschaltbild des Beladungserkennungsmoduls 74. Aus den am Eingang anliegenden, von den Relativwegsensoren 30, 32, 34, 36 gelieferten Signalen zD werden die Aufbaumassen mA an der vorderen Achse VA und der hinteren Achse HA gebildet. Darüber hinaus werden Verstärkungsfaktoren V zur Abstimmung der Massenverteilung ermittelt.

Figur 10 zeigt ein Prinzip-Blockschaltbild des Straßenerkennungsmoduls 76. Mittels dieses Moduls 76 wird eine Berechnung der Fahrbahnqualität als energetischer Zustand durchgeführt. Am Eingang des Moduls 76 liegen die vom Filtermodul 72 gelieferten Relativgeschwindigkeiten Aufbau/Rad vD sowie die Aufbaugeschwindigkeiten vA und die vom Modul 74 gelieferte Achslastverteilung mA an. Zusätzlich liegt vom Modul 70 das Signal Trigger_mmi als Status der Fahrmodi an. Das Modul 76 liefert Signale, um den aktuellen Fahrbahnzustand (eben/uneben) innerhalb der Dämpferregelung zu berücksichtigen. Hierzu werden in dem Modul 76 energetische Straßen-Zustandsgrößen eR (Energie Rad) ermittelt und mit entsprechenden Verstärkungsfaktoren für nachfolgende Module dargestellt. Darüber hinaus werden Minimal- und Maximalstromgrenzen generiert, damit ein Radspringen aufgrund von Überdämpfung oder Unterdämpfung erfolgreich unterbunden werden kann.

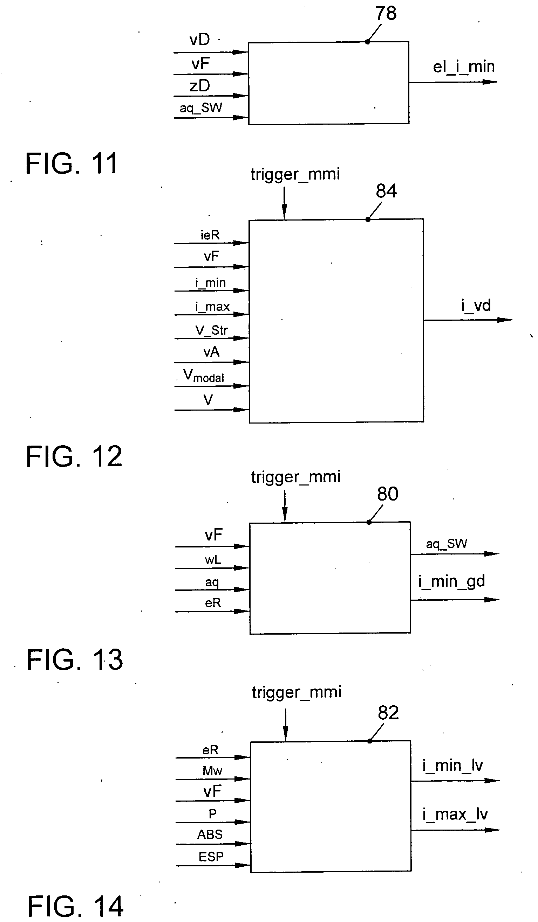

Figur 11 zeigt ein Prinzip-Blockschaltbild des Endlagendämpfungsmoduls 78. Am Modul 78 liegen als Eingangssignale die Relativgeschwindigkeiten vD des Aufbau/Rad vom Modul 72 sowie die Signale zD der Relativwegsensoren 30, 32, 34 und 36 an. Ferner werden die Fahrzeuggeschwindigkeit vF und ein Schaltsignal aq (Ein/Aus) aus dem Querdynamikmodul 80 (Figur 13) verarbeitet. Aus diesen Signalen werden Dämpferströme für jeden der Dämpfer 22, 24, 26 beziehungsweise 28 el_i_min berechnet. Mithilfe dieser Dämpferströme wird eine elektronische, radselektive Endlagendämpfung realisiert.

Figur 12 zeigt ein Prinzip-Blockschaltbild des Vertikaldynamikmoduls 84. An Eingangssignalen liegen an dem Modul 84 das vom Modul 76 gelieferte energetische Straßenzustandssignal eR, eA sowie die entsprechenden Verstärkungsfaktoren v-str. und die Min- und Max-Stromsignale i_min, i_max des Moduls 76 an. Ferner liegt die Fahrzeuggeschwindigkeit vF, die Aufbaugeschwindigkeiten vA aus dem Modul 72, die Wank- und Nickgeschwindigkeiten vModal aus dem Modul 72 und die Verstärkungsfaktoren V der Aufbaumassen aus dem Modul 74 an. Ferner wird der Status der Fahrmodi mittels des Signals trigger_mmi bereitgestellt. Das Modul 84 beinhaltet eine modusabhängige Regelung des vertikaldynamischen Komfortverhaltens und damit eine Kernfunktion der Dämpferregelung. Ziel dieses Vertikalregelungsmoduls 84 ist es, mithilfe der Funktion "Einzelradregelung" zunächst jede der Ecken des Aufbaus 20 separat zu regeln, um somit den Aufbau 20 weitestgehend von der Straßenanregung zu entkoppeln. Mithilfe einer Funktion "Modalregelung" werden die über den Aufbau 20 gekoppelten Modalbewegungen Nicken, Wanken und Hub (Figur 3) direkt beeinflusst. Das Modul 84 stellt einen Regelstrom i_vd für die Vertikaldämpfung bereit.

Figur 13 zeigt ein Prinzip-Blockschaltbild des Querdynamikmoduls 80. Als Eingangssignale liegen die Fahrzeuggeschwindigkeit vF, ein Lenkradwinkelsignal wL, ein Querbeschleunigungssignal und ein Straßenerkennungssignal aus dem Modul 76 an. Darüber hinaus wird das Statussignal der Fahrmodi trigger_mmi bereitgestellt. Durch das Modul 80 werden jeweils Ströme imin_qd für die Dämpfer 22, 24, 26 und 28 zur Beeinflussung der Fahrzeugquerdynamik berechnet. Hierdurch wird beispielsweise die Wankbewegung des Aufbaus 20 aufgrund von Querbeschleunigungen, beispielsweise bei Kurvenfahrten, Spurwechsel oder dergleichen, reduziert. Ferner kann hierdurch das eigene Lenkverhalten des Kraftfahrzeuges 10 durch gezielte Wankmomentverteilungen an der Vorderachse und der Hinterachse beeinflusst werden. Ferner wird der Fahrbahnzustand durch Einbeziehung der kinetischen Rad-Aufbau-Energien berücksichtigt. Das Querregelungsmodul 80 stellt ferner ein Schaltsignal aq_SW (Ein/Aus) bereit, mit dessen Hilfe andere Module, insbesondere komfortorientierte, Module aktiviert beziehungsweise deaktiviert werden können. Hierdurch kann erreicht werden, dass bei einer querdynamischen Regelung zum Beherrschen von sicherheitsrelevanten Situationen die Komfortregelungen für den Moment deaktiviert werden können.

Figur 14 zeigt ein Prinzip-Blockschaltbild des Längsdynamikmoduls 82. Am Modul 82 liegen als Eingangssignale das Straßenerkennungssignal eR vom Modul 76, ein Fahrerwunschmoment Mw, die Fahrzeuggeschwindigkeit vF, ein Bremsdruck P sowie Signale aus dem ABS-Eingriff und ESP-Eingriff an. Darüber hinaus ist das Signal trigger_mmi für den momentanen Status der Fahrmodi bereitgestellt. Das Längsdynamikmodul 82 berechnet Dämpferströme i.min_Lv und i.max_LV für die Dämpfer 22, 24, 26 und 28, um Nickvorgänge bei Brems- und Beschleunigungsvorgängen zu reduzieren. Gleichzeitig werden sicherheitsrelevante Eingriffe in die Fahrdynamik durch das ESP-System oder das ABS-System berücksichtigt.

Die anhand der Figuren 6 bis 14 erläuterte Zuordnung der einzelnen Module 70, 72, 74, 76, 78, 80, 82, 84, 86 zu den Hauptmodulen 62, 64, 66 ist lediglich beispielhaft. Andere geeignete Zuordnungen innerhalb des Dämpferreglers sind möglich.

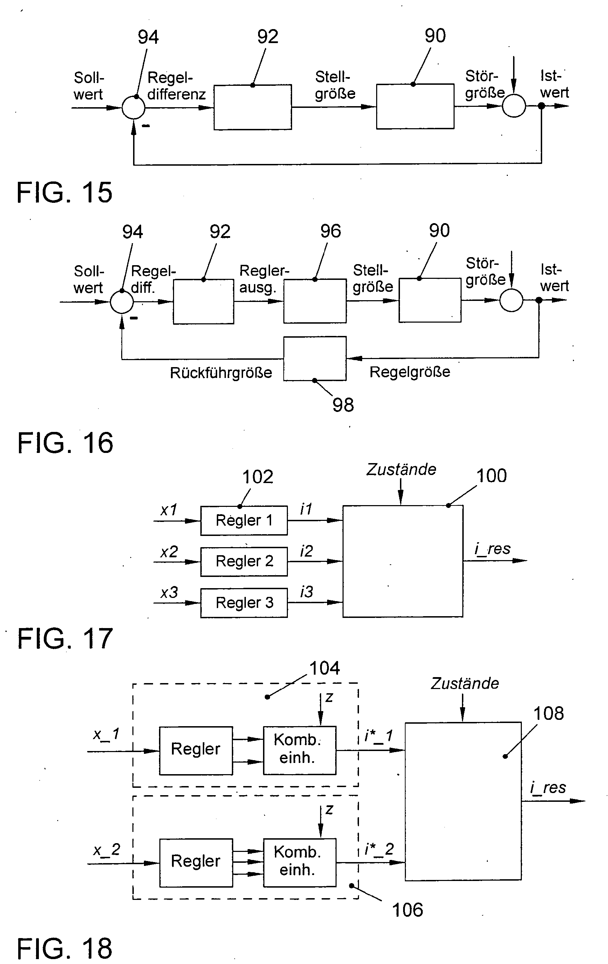

In Figur 15 ist ein Standardregelkreis dargestellt. Dieser besteht aus einer Strecke 90, einem Regler 92 und einer negativen Rückkopplung der Regelgröße, das heißt des Istwertes auf dem Regler 92. Die Regeldifferenz wird aus der Differenz zwischen Sollwert (Führungsgröße) und Regelgröße berechnet. Die Stellgröße wirkt auf die Strecke 90 und damit auf die Regelgröße. Die Störgröße bewirkt eine, normalerweise unerwünschte, Veränderung der Regelgröße, die kompensiert werden muss. Die Eingangsgröße des Reglers 92 ist die Differenz aus dem gemessenen Istwert der Regelgröße und dem Sollwert. Der Sollwert wird auch als Führungsgröße bezeichnet, dessen Wert durch den gemessenen Istwert nachgebildet werden soll. Da der Istwert durch Störgrößen verändert werden kann, muss der Istwert dem Sollwert nachgeführt werden. Eine in einem Vergleicher 94 festgestellte Abweichung des Istwertes von dem Sollwert, die sogenannte Regeldifferenz, dient als Eingangsgröße für den Regler 92. Durch den Regler 92 wird festgelegt, wie das Regelungssystem auf die festgestellten Abweichungen reagiert, beispielsweise schnell, träge, proportional, integrierend oder dergleichen. Als Ausgangsgröße des Reglers 92 ergibt sich eine Stellgröße, welche auf eine Regelstrecke 90 Einfluss nimmt. Die Regelung dient hauptsächlich zur Beseitigung von Störgrößen, um diese auszuregeln.

In Figur 16 ist eine detailliertere Darstellung des Regelkreises gemäß Figur 15 dargestellt. Es ist ein erweiterter Regelkreis mit den zusätzlichen Elementen Stellglied 96 und Messglied 98 gezeigt. Im Beispiel der erfindungsgemäßen Dämpferregelung setzt sich die Stelleinrichtung beziehungsweise das Stellglied 96 aus einer elektronischen Komponente und einer elektro-hydraulischen Komponente zusammen. Die elektronische Komponente entspricht dem Stromregler im Steuergerät 44, während die elektro-hydraulische Komponente dem elektrisch ansteuerbaren Ventil der Dämpfer 22, 24, 26 beziehungsweise 28 entspricht. In den nachfolgenden Ausführungen sollen diese jedoch nicht weiter betrachtet werden. Diese werden als ideal angenommen beziehungsweise ihr Einfluss wird vernachlässigt. Somit stimmt idealisiert der Reglerausgang, der die Steuergröße liefert, mit der Stellgröße überein oder ist zu dieser zumindest proportional. Der Regler 92 gemäß Figur 15 ist hierbei aufgeteilt in den eigentlichen Regler 92 und das Stellglied 96. Der Regler 92 dient dazu, eine Größe zu bestimmen, mit der auf eine durch den Vergleicher 94 festgestellte Regeldifferenz über das Stellglied 96 reagiert werden soll. Das Stellglied 96 liefert die notwendige Energie in der geeigneten physikalischen Form, um auf den Prozess beziehungsweise die Regelstrecke einzuwirken. In dem Messglied 98 wird der Istwert gemessen. Die Störgröße kann bei einer Regelung der Bewegung eines Fahrzeugaufbaus 20 in Unebenheiten der Fahrbahn, seitlich wirkenden Kräften, wie beispielsweise Wind oder dergleichen, oder ähnlichen Einflüssen begründet sein.

Unter Berücksichtigung der allgemein bekannten Funktionsweise anhand der in den Figuren 15 und 16 erläuterten Reglerstrukturen zeigt Figur 17 eine Möglichkeit der Stromberechnung in dem Stromberechnungsmodul 86. In einer Kombinationseinheit 100 zur Ermittlung eines resultierenden Stromes i_res wird dieser aus den, von Einzelreglern 102 bereitgestellten, verschiedenen Eingangsströmen i1, i2, i3 unter Verwendung von Zuständen/Zustandsgrößen ermittelt. Die Eingangsströme i können hierbei die von den Regelmodulen 76, 78, 80, 82 beziehungsweise 84 gelieferten Ströme sein. Der resultierende Strom i_res ist dann der Steuerstrom für die Dämpfer.

Im Stromberechnungsmodul 86 werden diese Sollströme für die Basissoftware generiert. Diese werden an die Schnittstelle (Signalausgangsmodul 68) übergeben. Die Basissoftware prägt diese Sollströme über den Stromregler, beispielsweise einen Zweipunktregler, PID-Regler mit PWM-Ansteuerung, den Dämpfern auf. Es wird als auf den vorgegebenen Sollstrom entsprechend geregelt.

Nach der in Figur 18 gezeigten Variante kann das Stromberechnungsmodul 86 auch eine Aufteilung in Modulelemente und Gesamtelement beinhalten. Hierbei sind beispielsweise Modulelemente 104 und 106 vorgesehen, die jeweils ein Reglermodul und eine Kombinationseinheit umfassen. Von diesen Modulen werden unter Berücksichtigung von Zustandsgrößen bereits Reglerausgangsströme i*_1 beziehungsweise i*_2 bereitgestellt. Die Kombinationseinheit 108 wertet die Reglerausgangsgrößen aus den Modulen 104 und 106, wie beispielsweise das Straßenerkennungsmodul 76, das Endlagendämpfungsmodul 78, das Querdynamikmodul 80, das Längsdynamikmodul 82 und das Vertikaldynamikmodul 84 aus, um die für den momentanen Fahrzustand am besten geeigneten Dämpfer-Sollströme i_res auszugeben.

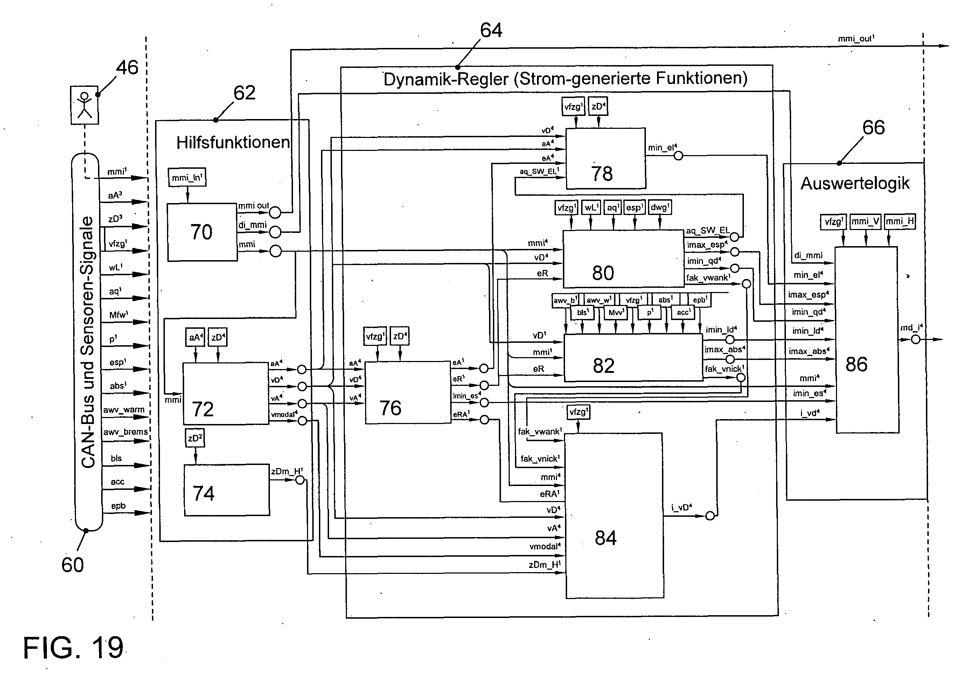

Figur 19 zeigt in einer Gesamtübersicht einen Signalflussplan der gesamten Dämpferregelung. Das Signaleingangsmodul 60 beinhaltet eingehende Sensorgrößen der Wegsensoren beziehungsweise der Beschleunigungssensoren, CAN-Signale, Fehlerbits sowie weitere Größen. Als Sensorgrößen finden beispielhaft Verwendung die von den Relativwegsensoren 30, 32, 34 und 36 gelieferten Signale (duty cycle) sowie die Aufbaubeschleunigungsgrößen der vertikal messenden Beschleunigungssensoren 38, 40 und 42. Zu diesen Größen gehören die entsprechenden Fehlerbits err_pwm_dc_vl/vr/hl/hr und err_adc_aA_vl/vr/hl, die Auskunft darüber geben, ob die Signale in Ordnung sind (Wert 0) oder fehlerhaft sind (Wert 1). Als CAN-Größen sollen beispielhaft Verwendung finden der Bremslichtschalter can_bls, der ABS-Zustand can_ABS, der ESP-Zustand can_ESP, der EDS-Zustand can_EDS, der EBV-Zustand can_EBV, die Fahrzeuggeschwindigkeit can_vF, die Querbeschleunigung can_aq, die Gierwinkelgeschwindigkeit can_dwg, der Lenkradwinkel can_wlges (der sich beispielsweise aus Fahrerlenkwinkel, Radwinkel oder zusammengesetztem Lenkwinkel bei elektrischen Lenkungen zusammensetzt), der Bremsdruck can_p, das Fahrerwunschmoment can_Mfw, die Längsbeschleunigung aus dem ACC can_al_acc und die Längsbeschleunigung can_al_epb. Auch zu diesen Signalen werden die Fehlerbits err_can_xx benötigt. Weiterhin Verwendung findet die aktuelle Position des Schaltmittels 46 mmi_in. Sinnvoll ist ferner das Einlesen der aus den Dämpfern 22, 24, 26 und 28 zurückgemessenen Ströme adc_i_vl/vr/hl/hr, sowie die Dämpferfehlerwerte err_D_vl/vr/hl/hr und die Klemme 30-Spannung aus dem Steuergerät 44.

Weiterhin wird ein Signal dgn_i_bypass übermittelt, das beinhaltet, ob die Steuergerätesoftware (Basis-Software) das Regelungssystem (Funktionssoftware) gerade bypasst, das heißt die Stromanforderung der Funktionssoftware ignoriert oder überschreibt. Ein weiteres Signal dgn_i_lim beinhaltet Informationen, ob die Steuergeräte-Software den Stellbereich des Stromes reduziert. Zur korrekten Berechnung der Relativweggrößen ist ferner der Grundeinstellungswert bdi_pwm_dc_vl/vr/hl/hr bzw. bdi_z_anp_vl/vr/hl/hr anzugeben. Dieser wird entsprechend bei der Steuergeräteinbetriebnahme durch ein Anlernverfahren bdi_modus angelernt. Optional ist auch möglich, Informationen zur Betriebssystemauslastung als Signale osk_ausl_xx zu integrieren.

Das Signalausgangsmodul 68 besteht aus dem im Regelungssystem ermittelten Sollstrom mdl_i, der Modusausgabe mdl_mmi_out sowie Werten aus der funktionalen Diagnose mdl_err_xx. Ferner wird ein Wertebereich angegeben, innerhalb dessen die Sensoren anlernbar sind. Dies sind die Signale mdl_pwm_max/min_vl/vr/hl/hr sowie mdl_z_anp_min/max_vl/vr/hl/hr. Weitere sinnvolle Größen sind der Funktions-Zustand des Regelungssystemes mdl_fkt sowie IDs, die den Code, den Datensatz sowie die Schnittstellen beschreiben mdl_xx/id, sowie eine Angabe, ob der Datensatz zum Code passt mdl_param_io und das Regelungssystem somit sinnvoll arbeiten kann.

Das Signaleingangsmodul 60 übernimmt somit eine Normierung, Konvertierung und Berechnung aller - an der Schnittstelle anliegenden - Signaleingänge auf ein physikalisches Standardformat in si-Einheiten.

Das Signalausgangsmodul 68 realisiert eine Normierung, Konvertierung und Berechnung aller Signalausgänge auf das in der Schnittstelle zur Basis-Software definierte Format.

Das Filtermodul 72 dient zur Ermittlung der vertikalen Aufbaueckgeschwindigkeiten, der vertikalen Modalgeschwindigkeiten (für Wanken und Nicken) und der Dämpfergeschwindigkeiten aus den Sensoren für die Aufbaubeschleunigung und den Relativweg zwischen Aufbau und Rad. Die Größen werden hierzu entsprechend gefiltert.

Das Man-Machine-Interfacemodul 70 ordnet die Reglermodi Komfort, Normal, Sport der entsprechenden mmi-Tastdarstellung des Schaltmittels 46 aus der Basis-Software zu. Ferner wird der Basis-Software mitgeteilt, welcher Modus im Regler aktiv ist.

Zweck des Straßenerkennungsmoduls 76 ist die Erkennung der Straßenbeschaffenheit. Dazu werden die entsprechenden Energieanteile für Rad und Aufbau ermittelt. Beide Anteile werden abschließend zu einer gemeinsamen Rad-Aufbau-Energie summiert, die dann Eingang in alle Module findet, die den Straßeneinfluss berücksichtigen.

Das Beladungserkennungsmodul 74 ermittelt aus den Relativweginformationen der Hinterachse durch entsprechend langwellige Filterung die quasistatische Relativwegposition. Diese kann in nachfolgenden Modulen zu einer beladungsabhängigen Veränderung der Stromanforderung verarbeitet werden. Zweck des Vertikaldynamikmoduls 84 mit den Bestandteilen Einzelrad (ve) und modal (vm) ist die Harmonisierung und Minimierung der Aufbauschwingungen unter Berücksichtigung von Zuständen wie Fahrgeschwindigkeit und Straßenbeschaffenheit und dergleichen. Der Einzelradregler dient dazu, eine Horizontierung des Aufbaus durch die Bedämpfung der einzelnen Fahrzeugecken zu bewirken. Vorteilhaft ist, dass sowohl die Sensorik wie auch die Aktorik (Dämpfer) an den Fahrzeugecken angeordnet sind, so dass an diesen Positionen ein örtlich und zeitlich korrekter/verlustfreier Eingriff möglich ist. Als wesentliche Regelgröße dient die Aufbaugeschwindigkeit. Eine Minimierung der Aufbaubewegung an den einzelnen Ecken ist nicht hinreichend, da ein Fahrer weiterhin die Kopplung der Bewegung empfindet, die zum Beispiel zu Nick- oder Wankvorgängen führt. Diese Beruhigung des Aufbaus 20 kann nur durch eine entsprechende Bedämpfung der Modalbewegungen erfolgen. Die Wirkungsweise der Vertikalregelung kann dabei über der Parametrierung variieren, so dass beispielsweise im Komfortmodus der Aufbau 20 weitestgehend von der Fahrbahn entkoppelt wird, während im Sportmodus ein direkterer Fahrbahnkontakt vermittelt wird.

Das Querdynamikmodul 80 ermöglicht eine optimale Dämpfungseinstellung bei Fahrsituationen mit erhöhter Dynamik- und/oder Sicherheitsanforderung. Ziel ist es, eine Aufbaubewegung aufgrund von Lenkbewegungen zu minimieren. Parallel muss sichergestellt werden, dass keine erhöhten Radlastschwankungen auftreten, die zu einer entsprechend geringeren Bodenhaftung der Reifen führen würden. Hinsichtlich der Querdynamik wird unterschieden zwischen quasistationären und dynamischen Bewegungen. Erstere können vom Dämpfer nur bedingt unterstützt werden, da er stationär keine Kraft aufbringen kann. Falls ein ESP-Eingriff stattfindet, liegt bereits eine fahrsicherheitsrelevante Situation vor, bei der es nur noch auf eine möglichst optimale Raddämpfung ankommt. Diese kann je nach Straßenzustand variabel eingestellt werden, so dass ein Radspringen bedingt durch Unter- und/oder Überdämpfung vermieden wird.

Im Längsdynamikmodul 82 findet eine Berücksichtigung der Dämpfungsanforderungen bei Anfahr- und Bremsvorgängen statt. Es werden Aufbau-Nickbewegungen bei Brems- und Beschleunigungsvorgängen reduziert. Auch hier wird - wie bei der Querdynamik - eine Kombination der Anforderungen hinsichtlich Komfort (mit geringen Aufbaubewegungen) und Sicherheit (mit geringen Radlastschwankungen) berücksichtigt. Bei ABS-Eingriffen ist wie beim ESP-Eingriff eine straßenangepasste optimale Raddämpfung appliziert.

Ziel des Endlagendämpfungsmoduls 78 ist es, Anschlaggeräusche durch mechanische Anschläge im Dämpfer zug- oder druckseitig zu vermeiden. Das wird dadurch erreicht, dass in den Endlagenbereichen die Dämpfergeschwindigkeit durch die Bestromung entsprechend reduziert wird.

In dem Stromberechnungsmodul 86 werden die Anforderungen aus den vorangegangenen Regelungs- und Steuerungsmodulen über entsprechende Zustandsbewertungen zusammengefasst. Hierbei wird grundsätzlich bei der Ansteuerung der Dämpfer 22, 24, 26 und 28 die Fahrsicherheit über den Fahrkomfort gestellt. Bei fahrdynamisch relevanten Fahrmanövern oder Systemeinschränkungen, beispielsweise Fehlern, wird beispielsweise mittels der Regelalgorithmen immer ein fahrsicherer Dämpferzustand eingestellt.

Es wird deutlich, dass mittels des Filtermoduls 72, des Vertikaldynamikmoduls 84 und des Endlagenmoduls 78 im Besonderen der Komfortanspruch realisiert wird. Die Sportlichkeits- und/oder Fahrsicherheitsansprüche werden insbesondere durch das Filtermodul 72 und das Längsdynamikmodul 82 sowie das Querdynamikmodul 80 zustandsabhängig fü quasistationäre und für dynamische Vorgänge realisiert.

Das Stromberechnungsmodul 86 ist verantwortlich für die Entkopplung der unterschiedlichen Regelungsansprüche und die Wahl der optimalen Steuergröße.

Für die einzelnen Module der Dämpferregelung ergeben sich unterschiedliche Anforderungen bezüglich der Abtastzeiten. Bei genügend Rechenkapazität könnten alle Module im schnellsten Raster, beispielsweise 1 ms-Raster, gerechnet werden. Dies ist jedoch auch bei den Steuergeräten 44 der neuesten Generation nicht realisierbar. Sinnvoll ist daher die steuerseitige Ausführung der Module aus Rechenzeitgründen mit unterschiedlichen Abtastzeiten, beispielsweise 1 ms, 5 ms, 10 ms beziehungsweise 100 ms.

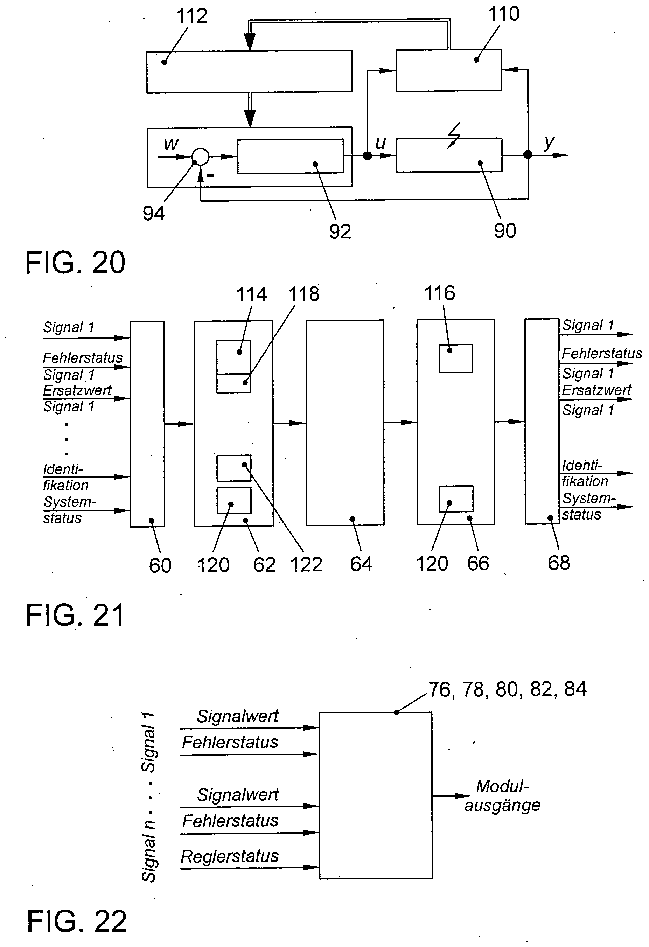

In Figur 20 ist ein Regelkreis gezeigt, der um eine Überwachungsebene erweitert ist. Hierdurch kann ein fehlertolerantes Regelsystem realisiert werden. Hier ist der in Figur 15 gezeigte Standardregelkreis durch ein Fehlerdiagnosemodul 110 ergänzt. Dieses Fehlerdiagnosemodul 110 beobachtet die Ein- und Ausgangsgrößen der Strecke 90 und überwacht somit den Regelkreis und ermittelt den Fehlerzustand der Regelstrecke. Die Schätzung des ermittelten Fehlers wird an ein Modul 112 zur Regleranpassung weitergeleitet. Über das Modul 112 wird auf den Regler 92 entsprechend des ermittelten Fehlerzustandes rückgegriffen, so dass minimal erforderliche Regelungsziele erreicht werden können.

Mittels der Fehlerdiagnosemodule 110 beziehungsweise Regleranpassungsmodule 112 kann somit in der Phase vom Auftreten eines Fehlers bis zu einem eventuellen Werkstattaufenthalt bei der Dämpferregelung die Bereitstellung der Dämpfung über Ersatzgrößen und Notfunktionen soweit aufrecht erhalten werden, dass mit eingeschränktem Komfort weitergefahren werden kann. Bei einem erkannten Fehler eines Eingangssignals ersetzt der Algorithmus die fehlende Information durch einen Ersatzwert, der in der Regel aus einer Aufbereitung anderer Signale berechnet werden kann. Dieser Ersatzwert sollte möglichst gut die jeweilige Signaleigenschaft charakterisieren und ist zur Bereitstellung zufriedenstellender Ergebnisse vorteilhaft dynamisch. Bei Ausfall eines oder mehrerer Sensoren beziehungsweise Aktuatoren werden abhängig vom Fehlerbild individuelle Notlaufmaßnahmen ergriffen. Die Regelverfahren werden nun mit dem Ersatzwert weitergeführt, wodurch eine Mindestfunktionalität der Regelung auch bei Auftreten eines Fehlers gewährleistet ist.

Die Fehlerbehandlung folgt folgendem Schema. Fehler tritt ein, Fehler wird erkannt, Fehler wird gemeldet, es werden weitere Folgen des Fehlers verhindert, Fehler wird behandelt (beispielsweise Fehlertoleranz), Fehler wird behoben (Reparatur), weiterarbeiten. Wünschenswert ist, die Fehler zu erkennen und zu behandeln, bevor sie sichtbare Konsequenzen zeigen, wobei jedoch stets ein Kompromiss zwischen Aufwand und Nutzen, das heißt zwischen Kosten, Leistung, Transparenz, Fehlertoleranzgrad und dergleichen, zu berücksichtigen ist.

In der Technik bedeutet Fehlertoleranz die Eigenschaft eines technischen Systems, seine Funktionsweise auch dann aufrechtzuerhalten, wenn unvorhergesehen Eingaben oder Fehler, beispielsweise in der Hard- oder Software, auftreten. Fehlertoleranz erhöht die Zuverlässigkeit des Systems.

Fehlertoleranz wird bei nicht-sicherheitsrelevanten System oft zur Steigerung der Verfügbarkeit der System eingesetzt oder um die Sicherheit von Sicherheitssystemen zu garantieren. Es wird unterschieden zwischen Fehlersicherheit (fail safe) und einer sanften Rückstufung (fail graceful). Bei Fehlersicherheit fährt das System beim Erkennen von Fehlern oder Ausfällen in einen sicheren, stabilen Betriebszustand und hält dort, bis die Ursache behoben oder repariert ist. Bei semi-aktiven Dämpfern wird beispielsweise häufig ohne Bestromung ein Bypassventil geöffnet, das eine Fail Safe-Kennlinie schaltet, die bezüglich der Fahrsicherheitsaspekte unkritisch ist. Bei einer Rückstufung arbeitet das System beim Erkennen einer Anomalie weiter, stellt aber nicht mehr den vollen Umfang seiner Funktionen oder Geschwindigkeit zur Verfügung, bis der Fehler behoben ist.

Die Berücksichtigung von Fehlermeldungen kann durch Einbindung einer Diagnoseebene in die, anhand der vorhergehenden Figuren erläuterten, Regelalgorithmen erfolgen. Dies kann sowohl horizontal entlang der Datenflusspfade, aber auch vertikal in der Modulhierarchie eingebettet werden.

In der Eingangsschnittstelle 60 sind die Eingangssignale jeweils um ein Fehlersignal beziehungsweise ein Fehlerzustandssignal zu ergänzen. Dies ist insbesondere bei den Größen notwendig, die direkten Einfluss auf die Regelung wie beispielsweise die Sensorgrößen, inklusive der CAN-Größen, haben.

Zusätzlich kann sowohl die Eingangsschnittstelle 60 als auch die Ausgangsschnittstelle 68 um generelle Informationen ergänzt werden. Dazu gehören beispielsweise die Informationen bezüglich Status der jeweiligen Komponente wie Basis-Software und Regler. Ferner sollten Identifikationsinformationen ausgetauscht werden, ob die Komponenten zueinander passen, so dass nur einander zugeordnete Stände miteinander gekoppelt werden. Im Fall einer Abweichung geht das Steuergerät 44 in den Notlauf über.

Darüber hinaus können statische Ersatzwerte an den Schnittstellen übergeben werden, da in einem Fehlerhandler meist Fehler und Ersatzwerte miteinander gekoppelt sind. Hier ist es möglich, die Ersatzwerte statt der eigentlichen Signalwerte zu übergeben oder aber in einem separaten Signaleingang diese zur Verfügung zu stellen. Ein separater Signaleingang ist aus folgenden Gründen vorteilhaft. Zum Einen kann in der sogenannten Pendingphase, in der noch nicht bekannt ist, ob tatsächlich ein Fehler vorliegt, entschieden werden, welcher Wert in einer nachfolgenden Regelung Verwendung findet. Zum Anderen liegen die tatsächlichen Signalwerte für eine funktionale Diagnose oder aber zum Wiedergutprüfen von Fehlern vor. Gerade der Aspekt der Wiedergutprüfung hat einen hohen Stellenwert, da er die Systemverfügbarkeit erhöht. Des Weiteren kann es in Initialisierungszyklen vorteilhaft sein, wenn beispielsweise Initialwerte als Signal übergeben werden und nicht Ersatzwerte.

Auch die Ausgangsschnittstelle 68 ist um entsprechende Fehlersignale ergänzt. Diese müssen zumindest Auskunft darüber geben, inwieweit die angeforderte Regelgröße fehlerbehaftet ist beziehungsweise in welchem Zustand sich der Regler befindet. Diese Zustände können "in Ordnung", "in Ordnung mit Einschränkung", "Notlauf", "fail safe" oder dergleichen sein. Ferner werden die Ausgangssignale mit einem Fehlerstatus versehen. Auch hier kann bei Bedarf ein Ersatzwert ermittelt werden.

Der Fehlerstatus kann dabei die unterschiedlichsten Zustände haben, wie beispielsweise "in Ordnung", "nicht in Ordnung", "Fehlerpending" (Fehler erkannt, aber noch nicht qualifiziert), "nicht verbaut" und so weiter.

Ferner ist ein Fehlermodul 114 im Signaleingangsmodul 62 vorgesehen, das die Fehlerstati der Eingangssignale auswertet. Hier können beispielsweise auch Fehlerindices ermittelt werden. Entsprechend kann ein Fehlermodul 116 auch im Signalausgangsmodul 66 ergänzt werden, zur Bereitstellung der Ausgangssignale an die Schnittstelle 68.

Darüber hinaus ist eine Bildung von Ersatzwerten vorgesehen. Dies kann in einem separaten Modul 118 erfolgen, das beispielsweise auch im Signaleingang angeordnet sein kann, das aber auch in das Fehlermodul 114 integriert sein kann. Hier ist unter anderem auch zu entscheiden, ob und in welcher Form auf Ersatzwerte zurückgeschaltet wird.

Ergänzend kann ein Notlaufmodul 120 vorgesehen sein, das generelle Auswertungen zur Notlaufstrategie vornimmt und diese entsprechend an die nachfolgenden Module weiterleitet. Hier kann eine Einbindung in das Signaleingangsmodul 62 und/oder in das Signalausgangsmodul 66 erfolgen. Im Signaleingangsmodul 62 kann beispielsweise eine Berechnung der Reglerstatusbeziehungsweise Notlaufinformationen für die einzelnen Regler erfolgen. Im Signalausgangsmodul kann beispielsweise die Umsetzung von Stromgrenzen beziehungsweise Strombändern realisiert sein.

Neben diesen Fehlermodulen ist ferner die Einbindung einer funktionalen Diagnose vorteilhaft. Diese ist vorzugsweise ebenfalls im Signaleingangsmodul 62 angeordnet. Ihre Fehlerweiterleitung kann dann direkt wie bei den Eingangssignalfehlern ausgeprägt sein. Es ist auch möglich, dieses Diagnosemodul 122 auch in einen Fehlerhandler zu integrieren. Da jedoch die funktionale Diagnose häufig modellbasiert oder wissensbasiert aufgebaut ist, empfiehlt sich eine Einbindung in die Reglerstruktur.

Die einzelnen Module 76, 78, 80, 82, 84 des Reglermoduls 64 können bei Bedarf ebenfalls mit zusätzlichen Eingangsgrößen, wie beispielsweise Fehlerstati einzelner Signale, Fehlerindex beziehungsweise Fehlerindices sowie Regler- oder Notlaufstatus beziehungsweise Notlaufzustand, versehen werden. Ersatzwertsignale können hier entweder anstelle des eigentlichen Signalwertes eingespeist werden oder aber als separater Signaleingang. Gerade während der Pendingphase eines Fehlers kann die Bereitstellung sowohl des eigentlichen Signalwertes als auch eines entsprechenden Ersatzwertes vorteilhaft sein.

Die gerade erläuterten Möglichkeiten der Zuordnung der einzelnen Module beziehungsweise Bearbeitungsschritte sind lediglich Beispielhaft. Es sind selbstverständlich auch andere Zuordnungen, die jeweiligen Funktionen erfüllend, möglich.

Die Fehler- beziehungsweise Diagnose- beziehungsweise Ersatzwertmodule können in die bestehende Reglerstruktur, wie diese in Figur 6 beziehungsweise Figur 19 verdeutlicht werden, eingebunden werden.

In den Figuren 21, 22 und 23 sind hierzu die entsprechenden angepassten Reglerstrukturen dargestellt.

Figur 21 zeigt eine Ergänzung entsprechend Figur 6, wobei hier an der Eingangsschnittstelle 60 jeweils das Fehlerstatussignal und das Ersatzwertsignal eines Signales mit eingespeist werden. An der Ausgangsschnittstelle 68 wird entsprechend zu jedem Signal ein Fehlerstatussignal und Ersatzwertsignal ausgegeben. Darüber hinaus werden sowohl an der Eingangsschnittstelle 60 Identifikationssignale und Systemstatussignale eingelesen und an der Ausgangsschnittstelle 68 entsprechende Identifikationssignale und Systemstatussignale ausgegeben. In dem Signaleingangsmodul 62 und dem Reglermodul 64 beziehungsweise Ausgangsmodul 66 sind die entsprechenden erläuterten Module eingebunden.

Figur 22 zeigt ein einzelnes Modul, beispielsweise das Straßenerkennungsmodul 76, das Endlagenmodul 78, das Querdynamikmodul 80, das Längsdynamikmodul 82 oder das Vertikaldynamikmodul 84. An jedem der Module werden dann über zusätzliche Eingänge die zu den Signalwerten entsprechende Fehlerstatussignale beziehungsweise Reglerstatussignale mit zur Verfügung gestellt.

Für das Fehlermanagement gilt also, dass dieses Diagnosemodule, Ersatzwertemodule und/oder Notlaufmodule umfasst. Durch das Fehlermanagement wird die Regelgüte erhöht und die Verfügbarkeit des Dämpferreglers verbessert. Die Schnittstelle zwischen Basissoftware und Funktionssoftware (Dämpferregler) ist um Identifikationssignale erweitert, so dass die Prüfung auf ein konkretes Zusammenspiel erfolgen kann. Beispielsweise kann so sichergestellt werden, dass eine bestimmte Basissoftwareversion nur mit der vorhandenen Dämpferreglerversion kommunizieren darf. Die Schnittstelle zwischen Basissoftware und Funktionssoftware enthält sowohl das eigentliche Signal als auch ein zweites paralleles Signal über den Status und/oder den Ersatzwert des Signalwertes. Dies kann beispielsweise die Meldungen "Korrekt", "Fehlerhaft", "Initial", "Ersatzwert" oder dergleichen beinhalten. Es kann ein separates Fehlermodul vorgesehen sein, das die einzelnen Fehlerzustände auswertet und zu einem Gesamtfehlerstatus zusammenfasst. Es kann ein Ersatzwertemodul vorgesehen sein, das je nach Fehlerzustand Ersatzwerte für die Signaleingänge der Reglermodule berechnet, damit diese auch im Fehlerfall sinnvoll arbeiten können. Daraus kann ein Reglerstatus/Notlaufmodul vorgesehen sein, dass den Reglermodulen mitteilt, wie der Reglerstatus ist und das eventuell andere Regelungsstrategien veranlasst. Darüber hinaus ist eine funktionale Diagnose vorgesehen, die basierend auf der Auswertung der Funktion der beteiligten Sensoren und/oder Aktuatoren einen Fehlerstatus ermittelt. Die Reglermodule selbst enthalten neben den eigentlichen Eingängen für die Signale weitere Eingänge, die Ersatzwerte, Reglerstatus und dergleichen als zusätzliche Informationen bereitstellen.

Die Erfindung betrifft also ein Verfahren oder System zur Regelung der Bewegung eines Fahrzeugs mit elektronisch ansteuerbaren Stoßdämpfern, wobei in dem Regelungssystem den parallel möglichen Anforderungen nach "Komfortausführung" und "hoher Sportlichkeit" sowie Fahrersicherheit alle berücksichtigt und weitgehend entkoppelt werden durch die Verwendung von zustandsabhängigen Regelungsmodulen, insbesondere für Fahrzustände (Vertikal-, Längs- und Querdynamik), Beladungszustände, Energiezustände (Aufbau, Dämpfer, Rad, Straße) und Fahreraktivitäten (Gas, Bremse, Lenken, Schaltstufe, Dämpfermodusauswahl).

### Bezugszeichenliste

- 10: Kraftfahrzeug
- 12: Rad
- 14: Rad
- 16: Rad
- 18: Rad
- 20: Aufbau
- 22: Dämpfer
- 24: Dämpfer
- 26: Dämpfer
- 28: Dämpfer
- 30: Wegsensor
- 32: Wegsensor
- 34: Wegsensor
- 36: Wegsensor
- 38: Beschleunigungssensoren
- 40: Beschleunigungssensoren
- 42: Beschleunigungssensoren
- 44: Steuergerät
- 46: Schaltmittel
- 48: Feder
- 50: Feder
- 52: Feder
- 54: Feder
- 56: Schwerpunkt
- 57: Kennlinie
- 58: Hub
- 60: Signaleingangsmodul
- 61: Nicken
- 62: Hilfsfunktionsmodul
- 63: Wanken
- 64: Reglermodul
- 66: Signalausgangsmodul
- 68: Signalausgangsmodul
- 70: Man-Machine-Interfacemodul
- 72: Filtermodul
- 74: Beladungserkennungsmodul
- 76: Straßenerkennungsmodul
- 78: Endlagendämpfungsmoduls
- 80: Querdynamikmodul
- 82: Längsdynamikmodul
- 84: Vertikaldynamikmodul
- 86: Stromberechnungsmodul
- 90: Strecke
- 92: Regler
- 94: Vergleicher
- 96: Stellglied
- 98: Messglied
- 100: Kombinationseinheit
- 102: Einzelregler
- 104: Modulelemente
- 106: Modulelemente
- 108: Kombinationseinheit
- 110: Fehlerdiagnosemodul
- 112: Regleranpassungsmodul
- 114: Fehlermodul
- 116: Fehlermodul
- 118: Modul
- 120: Notlaufmodul
- 122: Diagnosemodul

## Patentansprüche

1. Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden und der Dämpferregler wenigstens ein Steuersignal zur Ansteuerung von Aktuatoren, ins-besondere semi-aktiven oder aktiven Dämpfern, liefert, mittels denen die Bewegung des Fahrzeugaufbaus beeinflusst werden kann, wobei aus den Sensorsignalen unter Berücksichtigung von momentanen und erwarteten Fahrzuständen und/oder Beladungszuständen und/oder Energiezuständen und/oder Fahreraktivitäten in Abhängigkeit von wählbaren Anforderungen an die Bewegung des Fahrzeugaufbaus und Fahrsicherheitsanforderungen mittels zustandsabhängiger Regelalgorithmen das wenigstens eine Steuersignal zur Ansteuerung der Aktuatoren ermittelt wird, **dadurch gekennzeichnet, dass** die zuständigkeitsabhängigen Regelalgorithmen übergeordnete Meldungen berücksichtigen, wobei als übergeordnete Meldungen Diagnosesignale und/oder Ersatzwertesignale und/oder Notlaufsignale berücksichtigt werden.

2. Verfahren nach Anspruch 1, **dadurch gekennzeichnet, dass** als das wenigstens eine Steuersignal ein direkt die Aktuatoren beeinflussender Steuerstrom bereitgestellt wird.

3. Verfahren nach einem der vorhergehenden Ansprüche, **dadurch gekennzeichnet, dass** als wählbare Anforderungen an die Bewegung des Fahrzeugaufbaus wenigstens zwischen Komfort und Sportlichkeit gewählt werden kann.

4. Verfahren nach Anspruch 3, **dadurch gekennzeichnet, dass** die Wahl stufenlos oder in Stufen zwischen hohem Komfort und hoher Sportlichkeit erfolgen kann.

5. Verfahren nach einem der vorhergehenden Ansprüche, **dadurch gekennzeichnet, dass** als Fahrzustände die Vertikaldynamik und/oder die Längsdynamik und/oder die Querdynamik des Fahrzeuges berücksichtigt wird.

6. Verfahren nach einem der vorhergehenden Ansprüche, **dadurch gekennzeichnet, dass** als Energiezustände die Energiezustände des Aufbaus und/oder des Rades und/oder der Straße und/oder des Aktuators berücksichtigt werden.

7. Verfahren nach einem der vorhergehenden Ansprüche, **dadurch gekennzeichnet, dass** als Fahreraktivität der Betätigungszustand des Gaspedals und/oder des Bremspedals und/oder der Lenkung und/oder der Getriebeschaltung berücksichtigt wird.

8. Verfahren nach einem der vorhergehenden Ansprüche, **dadurch gekennzeichnet, dass** ein Komfortanspruch in den Regelalgorithmen insbesondere durch die Verwendung von mindestens einem zustandsabhängigen Filter und/oder mindestens einem zustandsabhängigen Vertikaldynamik-Modul für die Einzelradbewegung und/oder die Gesamtbewegung des Aufbaus (Hub, Wanken und Nicken) und/oder mindestens einem zustands-abhängigen Endlagen-Modul, insbesondere unter Berücksichtigung der Energiezustände von Aufbau, Dämpfer, Rad und/oder Straße, realisiert wird.

9. Verfahren nach einem der vorhergehenden Ansprüche, **dadurch gekennzeichnet, dass** der Sportlichkeitsanspruch und/oder Fahrsicherheitsanspruch in den Regelalgorithmen, ins-besondere durch die Verwendung von zustandsabhängigen Filtern und zustandsabhängigen Längs- und Querdynamikmodulen für quasistationäre und für dynamische Vorgänge, insbesondere unter Berücksichtigung der Energiezustände von Aufbau, Dämpfer, Rad und/oder Straße, realisiert wird.

10. Verfahren nach einem der vorhergehenden Ansprüche, **dadurch gekennzeichnet, dass** die zuständigkeitsabhängigen Regelalgorithmen von den Zuständen und Anforderungen einzeln oder kombiniert durchgeführt werden.

11. Verfahren nach einem der vorhergehenden Ansprüche, **dadurch gekennzeichnet, dass** der Code der Regelungsalgorithmen in unterschiedlichen Zeitrastern in dem Dämpferregler abgearbeitet wird, wobei mindestens ein schnelles Raster mit einem Zeitraster zwischen 0,5 ms und 5 ms, vorzugsweise ein 1ms-Raster und ein 5ms-Raster, und mindestens ein langsameres Raster mit einem Zeitraster >5ms, vorzugsweise ein 10ms-Raster und ein 100ms-Raster, existieren.

12. System zur Beeinflussung der Bewegung eines in seinen Bewegungsabläufen steuerbaren oder regelbaren Fahrzeugaufbaus eines Kraftfahrzeuges, mit Sensoren, welche die Bewe-gung des Fahrzeugaufbaus erfassen, mit steuerbaren oder regelbaren Aktuatoren, ins-besondere semi-aktiven oder aktiven Dämpfern, die zwischen dem Fahrzeugaufbau und den Fahrzeugrädern angeordnet sind, mit einem Dämpferregler, mittels dem die Sensorsignale verarbeitet werden und wenigstens ein Ansteuersignal für die Aktuatoren bereitgestellt wird, wobei der Dämpferregler und/oder ein Steuergerät Module umfasst bzw. umfassen, mittels denen aus den Sensorsignalen unter Berücksichtigung von momentanen und erwarteten Fahrzuständen und/oder Beladungszuständen und/oder Energiezuständen und/oder Fahreraktivitäten, in Abhängigkeit von wählbaren Anforderungen an die Bewegung des Fahrzeugaufbaus und Fahrsicherheitsanforderungen, wenigstens ein Steuersignal für die Aktuatoren generierbar ist, **dadurch gekennzeichnet, dass** das System ein Fehlermanagementmodul aufweist, das ein Diagnosemodul, ein Ersatzwertekonzeptmodul und ein Regel-NotlaufStatusmodul umfasst, womit das System dazu geeignet ist, ein Verfahren gemäß einem der Ansprüche 1 bis 11 auszuführen.

## Claims

1. Method for generating signals for influencing the movement of a vehicle body, whose movement sequences can be open-loop or closed-loop controlled, of a motor vehicle, wherein the movement of the vehicle body is determined by sensor, the sensor signals corresponding to the determined sensor values are fed to a damper regulator, and the damper regulator supplies at least one control signal for actuating actuators, in particular semi-active or active dampers, by means of which the movement of the vehicle body can be influenced, wherein the at least one control signal for actuating the actuators is determined from the sensor signals taking into account instantaneous and expected driving states and/or load states and/or energy states and/or driver activities as a function of selectable requests with respect to the movement of the vehicle body and driving safety requirements by means of state-dependent regulating algorithms,
**characterized in that** the state-dependent regulating algorithms take into account superordinate messages, wherein diagnostic signals and/or equivalent value signals and/or emergency operation signals are taken into account as superordinate messages.

2. Method according to Claim 1, **characterized in that** a control current which influences the actuators directly is made available as the at least one control signal.

3. Method according to one of the preceding claims, **characterized in that** switching can be carried out at least between comfort and sportiness as selectable requests with respect to the movement of the vehicle body.

4. Method according to Claim 3, **characterized in that** the switch between high comfort and high sportiness can be carried out in an infinitely variable fashion or in increments.

5. Method according to one of the preceding claims, **characterized in that** the vertical dynamics and/or the longitudinal dynamics and/or the lateral dynamics of the vehicle are/is taken into account as driving states.

6. Method according to one of the preceding claims, **characterized in that** the energy states of the vehicle body and/or of the wheel and/or of the road and/or of the actuator are/is taken into account as energy states.

7. Method according to one of the preceding claims, **characterized in that** the activation state of the accelerator pedal and/or of the brake pedal and/or of the steering and/or of the transmission are/is taken into account as driver activity.

8. Method according to one of the preceding claims, **characterized in that** a comfort request is implemented in the regulating algorithms, in particular by using at least one state-dependent filter and/or at least one state-dependent vertical dynamics module for the individual wheel movement and/or the overall movement of the vehicle body (lifting, rolling and pitching) and/or at least one state-dependent end position module, in particular taking into account the energy states of the vehicle body, damper, wheel and/or road.

9. Method according to one of the preceding claims, **characterized in that** the sportiness request and/or driving safety request are implemented in the regulating algorithms, in particular by using state-dependent filters and state-dependent longitudinal and lateral dynamics modules for quasi-steady-state processes and for dynamic processes, in particular taking into account the energy states of the vehicle body, damper, wheel and/or road.

10. Method according to one of the preceding claims, **characterized in that** the responsibility-dependent regulating algorithms are carried out by the states and requests individually or in a combined fashion.

11. Method according to one of the preceding claims, **characterized in that** the code of the regulating algorithms is processed in different time grids in the damper regulator, wherein there is at least one highspeed grid with a time grid between 0.5 ms and 5 ms, preferably a 1 ms grid and a 5 ms grid, and at least one relatively slow grid with a time grid > 5 ms, preferably a 10 ms grid and a 100 ms grid.

12. System for influencing the movement of a vehicle body, whose movement sequences can be open-loop or closed-loop controlled, of a motor vehicle, having sensors which detect the movement of the vehicle body, having actuators which can be open-loop or closed-loop controlled, in particular semi-active or active dampers which are arranged between the vehicle body and the vehicle wheels, having a damper regulator by means of which the sensor signals are processed, and at least one actuating signal for the actuators is made available, wherein the damper regulator and/or a control unit comprise/comprises modules by means of which at least one control signal for the actuators can be generated from the sensor signals taking into account instantaneous and expected driving states and/or load states and/or energy states and/or driver activities, as a function of selectable requests with respect to the movement of the vehicle body and driving safety requirements, **characterized in that** the system has a fault management module which comprises a diagnostic module, an equivalent value concept module and a regulating emergency operation status module, wherein the system is suitable for carrying out a method according to one of Claims 1 to 11.

## Revendications

1. Procédé pour générer des signaux destinés à influencer le mouvement d'une carrosserie, dont le déroulement des mouvements peut être commandé ou régulé, d'un véhicule, le mouvement de la carrosserie de véhicule étant déterminé par des capteurs, les signaux de capteur correspondant aux valeurs de capteur déterminées étant acheminés à un régulateur d'amortisseur et le régulateur d'amortisseur délivrant au moins un signal de commande destiné à commander des actionneurs, notamment des amortisseurs semi-actifs ou actifs, au moyen desquels le mouvement de la carrosserie de véhicule peut être influencé, l'au moins un signal de commande destiné à commander des actionneurs étant déterminé au moyen d'algorithmes de régulation dépendants de l'état à partir des signaux de capteur en tenant compte des états de conduite et/ou des états de chargement et/ou des états d'énergie et/ou des activités du conducteur momentanés ou attendus en fonction d'exigences pouvant être sélectionnées concernant le mouvement de la carrosserie de véhicule et d'exigences en matière de sécurité de conduite,
**caractérisé en ce que** les algorithmes de régulation dépendant de la compétence tiennent compte de messages de niveau supérieur, les messages de niveau supérieur pris en compte étant des signaux de diagnostic et/ou des signaux de valeurs de remplacement et/ou des signaux de fonctionnement de secours.

2. Procédé selon la revendication 1, **caractérisé en ce que** l'au moins un signal de commande délivré est un courant de commande qui influence directement les actionneurs.

3. Procédé selon l'une des revendications précédentes, **caractérisé en ce que** les exigences pouvant être sélectionnées concernant le mouvement de la carrosserie de véhicule peuvent être sélectionnées au moins entre un mode confort et un mode sportif.

4. Procédé selon la revendication 3, **caractérisé en ce que** la sélection peut être effectuée en continu ou par paliers entre un confort élevé et une sportivité élevée.

5. Procédé selon l'une des revendications précédentes, **caractérisé en ce que** les états de conduite pris en compte sont la dynamique verticale et/ou la dynamique longitudinale et/ou la dynamique transversale du véhicule.

6. Procédé selon l'une des revendications précédentes, **caractérisé en ce que** les états d'énergie pris en compte sont les états d'énergie de la carrosserie et/ou de la roue et/ou de la route et/ou de l'actionneur.

7. Procédé selon l'une des revendications précédentes, **caractérisé en ce que** l'activité du conducteur prise en compte est le niveau d'actionnement de la pédale d'accélérateur et/ou de la pédale de frein et/ou de la direction et/ou du changement de rapport de la boîte de vitesses.

8. Procédé selon l'une des revendications précédentes, **caractérisé en ce qu'**une demande de confort dans les algorithmes de régulation est notamment réalisée en utilisant au moins un filtre dépendant de l'état et/ou au moins un module de dynamique verticale dépendant de l'état pour le mouvement des roues individuelles et/ou le mouvement global de la carrosserie (excursion, roulis et tangage) et/ou au moins un module de position finale dépendant de l'état, notamment en tenant compte des états d'énergie de la carrosserie, de l'amortisseur, de la roue et/ou de la route.

9. Procédé selon l'une des revendications précédentes, **caractérisé en ce que** la demande de sportivité et/ou la demande de sécurité de conduite confort dans les algorithmes de régulation est notamment réalisée en utilisant des filtres dépendant de l'état et des modules de dynamique longitudinale et transversale dépendant de l'état pour les opérations quasi-stationnaires et pour les opérations dynamiques, notamment en tenant compte des états d'énergie de la carrosserie, de l'amortisseur, de la roue et/ou de la route.

10. Procédé selon l'une des revendications précédentes, **caractérisé en ce que** les algorithmes dépendant de la compétence des états et des exigences sont exécutés individuellement ou en combinaison.

11. Procédé selon l'une des revendications précédentes, **caractérisé en ce que** le code des algorithmes de régulation est traité dans différentes grilles de temps dans le régulateur d'amortisseur, au moins une grille rapide ayant une grille temporelle entre 0,5 ms et 5 ms, de préférence une grille de 1 ms et une grille de 5 ms, et au moins une grille lente ayant une grille temporelle > 5 ms, de préférence une grille de 10 ms et une grille de 100 ms, étant présentes.

12. Système pour influencer le mouvement d'une carrosserie, dont le déroulement des mouvements peut être commandé ou régulé, d'un véhicule, comprenant des capteurs qui détectent le mouvement de la carrosserie de véhicule, comprenant des actionneurs commandables ou régulables, notamment des amortisseurs semi-actifs ou actifs qui sont disposés entre la carrosserie de véhicule et les roues de véhicule, comprenant un régulateur d'amortisseur au moyen duquel sont traités les signaux de capteur et au moins un signal de commande pour les actionneurs est délivré, le régulateur d'amortisseur et/ou un contrôleur comprenant des modules au moyen desquels peut être généré au moins un signal de commande pour les actionneurs en tenant compte des états de conduite et/ou des états de chargement et/ou des états d'énergie et/ou des activités du conducteur momentanés ou attendus en fonction d'exigences pouvant être sélectionnées concernant le mouvement de la carrosserie de véhicule et d'exigences en matière de sécurité de conduite, **caractérisé en ce que** le système possède un module de gestion des défauts qui comprend un module de diagnostic, un module de concept de valeurs de remplacement et un module d'état de fonctionnement de secours de la régulation, le système étant conçu pour mettre en oeuvre un procédé selon l'une des revendications 1 à 11.
